Europäisches Patentamt

European Patent Office

Office européen des brevets

(19)

(11) Publication number: **0 204 953**
**A2**

(12) **EUROPEAN PATENT APPLICATION**

(21) Application number: **86106137.2**

(22) Date of filing: **05.05.86**

(51) Int. Cl.⁴: **C 08 F 6/00**

---

(30) Priority: **16.05.85 US 734720**

(43) Date of publication of application:
**17.12.86 Bulletin 86/51**

(84) Designated Contracting States:
**DE FR GB NL**

(71) Applicant: **BORG-WARNER CHEMICALS INC.**
**International Center**
**Parkersburg West Virginia 26102(US)**

(72) Inventor: **Wozny, Mary Ellen**
**P.O. Box 112**
**Coolville Ohio 45723(US)**

(74) Representative: **VOSSIUS & PARTNER**
**Siebertstrasse 4 P.O. Box 86 07 67**
**D-8000 München 86(DE)**

---

(54) **Process for scavenging free residual monomer in aqueous media.**

(57) A process is provided for reducing the free acrylonitrile monomer content of an aqueous medium containing the monomer, the process comprising adding a hydroxylamine to the medium in an amount less than the stoichiometric equivalent of the free acrylonitrile monomer present in the medium.

Case: 083185-M
Burg-Warner Chemicals, Inc.

VOSSIUS & PARTNER
PATENTANWÄLTE
SIEBERTSTR. 4
8000 MÜNCHEN 86

0204953

— 1 —

## PROCESS FOR SCAVENGING FREE
## RESIDUAL MONOMER IN AQUEOUS MEDIA

The present invention relates generally to a process for reducing the amount of residual acrylonitrile monomer dissolved in acrylonitrile containing polymers and aqueous media. More particularly, the present invention relates to a process wherein coagulation of acrylonitrile containing polymers dispersed in the aqueous media and scavenging of residual monomer may be accomplished by the same means. As is apparent from the ensuing description, the present invention is applicable to aqueous media from batch, semi-batch and continuous polymerization processes.

Acrylonitrile is employed in the preparation of a wide variety of commercially important resins, including nitrile rubbers, styrene-acrylonitrile copolymer resins (SAN), ABS graft copolymer thermoplastic molding resins, and numerous other acrylonitrile-containing graft copolymer impact modifier resins.

Acrylonitrile copolymers can be prepared in an aqueous system by batch, semi-batch or continuous processes using conventional emulsion or suspension polymerization techniques. These techniques usually involve the formation of a "latex" or aqueous medium having acrylonitrile containing polymer, residual monomers, catalyst, by-products and stabilizers dispersed therein. This latex must then be coagulated to form a slurry of polymer particles, and separation of the polymer particles from the water medium effectuated. However, even where the polymerization proceeds until it is substantially complete, an undesirable amount of unpolymerized acrylonitrile monomer usually remains both in the aqueous phase and in the polymer matrix.

Because of environmental considerations, the presence of free acrylonitrile in the aqueous phase must be minimized where the monomer-containing water will become part of the plant waste water effluent. Further, residual acrylonitrile monomer present in the copolymer may be detrimental to the color stability of the resin.

Although residual free monomer may be removed by physical processes, such as by steam or vacuum stripping, these processes are relatively difficult to operate, and are relatively expensive and energy intensive. Further, when used by themselves these processes generally result in monomer removal which is incomplete. In addition, such methods do not prevent acrylonitrile monomer remaining in the waste stream from being lost to the atmosphere. It is in part for these reasons that chemical monomer scavenging methods were developed.

A variety of chemical methods for scavenging residual monomers from the polymer and the aqueous medium are known in the art. These methods usually involve adding to the aqueous medium a compound which is capable of forming an adduct with free acrylonitrile. Although free acrylonitrile is relatively volatile, acrylonitrile adducts are generally much less so. Consequently, formation of an acrylonitrile/scavenger adduct usually results in less acrylonitrile being vented to the atmosphere and more residual acrylonitrile being retained in the waste stream, where it may be degraded by biological means.

Chemical methods are disclosed by U.S. Patent No. 4,251,412 to Ferrini, which relates to a method for treating acrylonitrile latices to reduce the residual monomer content by adding an alkyl or alkanol amine, such as hydroxylamine acid sulfate and hydrochloride, dimethylamine or diethanolamine, to the latex in an amount at least stoichiometrically equivalent to the amount of residual acrylonitrile monomer present. U.S. Patent No. 4,278,582 to Miller discloses a process for reducing the amount of residual acrylonitrile by treating the mixtures with ammonium or thio compounds or with a variety of inorganic salts. U.S. Patent 4,399,240 to Senyek teaches the use of 6 and 7 membered, saturated heterocyclic amines as acrylonitrile monomer scavengers. Other means of scavenging acrylonitrile monomers are disclosed by U.S. Patent Nos. 4,396,740; 3,998,797; 4,221,878; 4,180,486; 4,275,175; 4,196,111; 4,215,024; 4,221,905; 4,228,119; 4,365,027; Chemical Abstract 98(6)35808V and German Patent No. 148,223. A non-scavenger method, involving post-reaction of the acrylonitrile containing mixture with excess comonomer in the presence of additional catalyst, is disclosed by U.S. Patent 4,272,425.

Although these processes may be effective, many require relatively large amounts of the scavenger compound in order to reduce the amount of free acrylonitrile monomer to an acceptable level. This may have the effect of increasing the level of non-aqueous volatiles present in the aqueous phase, and may present further environmental problems as well as additional cost for waste water treatment. Further, many of these processes involve treatment of the polymer and/or medium after coagulation. Not only does such a procedure entail the use of a separate coagulant system, but may result in less than optimal contact between the residual monomer present in the polymer and the scavenger compound. Consequently, a process wherein the amount of residual free acrylonitrile monomer in acrylonitrile containing polymers and concomitant aqueous media may be efficiently reduced using relatively minor amounts of a ciently reduced using relatively minor amounts of a scavenger compound offers significant advantages over many processes known in the art. A process wherein minor amounts of scavenger may be used to at least partially coagulate an aqueous polymer dispersion, so that coagulation and monomer scavenging may be accomplished by the same means, offers even further advantages.

The present invention is a process for reducing the free residual acrylonitrile monomer content of an aqueous medium containing the monomer, the process comprising adding to the medium a hydroxylamine in an amount less than the stoichiometric equivalent of the amount of free acrylonitrile monomer present in the medium. The hydroxylamine preferably is selected from the group consisting of N-methyl hydroxylamine, N-ethyl hydroxylamine and acid complexed hydroxylamine. In the most preferred embodiment the hydroxylamine is hydroxylamine complexed with a strong acid, such as HCl or $H_2SO_4$, and preferably is added to the medium in an amount sufficient to at least partially coagulate acrylonitrile containing polymer dispersed in the medium.

The present invention is a process for reducing the free acrylonitrile content of an aqueous medium containing the monomer. This aqueous medium usually has acrylonitrile monomer, comonomers and acrylonitrile containing polymers dispersed therein. Depending on the stage in the resin production process at which the medium is treated, this medium may have the polymer dispersed therein as a suspension, emulsion or slurry.

The aqueous dispersions of acrylonitrile polymers and residual monomer useful in the present invention are obtained by polymerizing acrylonitrile alone, or with other vinylidene comonomers to form copolymers. Examples of such copolymers are those with about 50 wt% or more of butadiene, as in nitrile rubbers, up to about 50 wt% acrylonitrile, and about 50-95 wt% styrene as in SAN resins; about 50-5 wt% acrylonitrile with about 1-99 wt% each of alkylacrylate, such as methylacrylate, ethylacrylate, butylacrylate, methylmethacrylate and the like, styrene and butadiene as in the well known ABS type terpolymer resins.

Typically, polymerizable comonomers, in addition to butadiene, styrene and an alkylacrylate or alkacrylate wherein the alkyl group contains 1 to 8 carbon atoms, will be vinylidene monomers having at least one terminal $CH_2$=C group. Polymerizable comonomers useful in the present invention include: other vinyl aromatics, such as alpha-methyl styrene and chloro-styrene; alpha-olefins such ethylenes, propylenes and isobutylenes; vinylhalides such as vinyl chloride, vinyl bromide, vinyl fluoride, vinylidene chloride, and vinylidene fluoride; vinyl esters such as vinyl acetate; other alpha,beta-olefinically unsaturated nitriles, such as methacrylonitrile; alkyl vinyl ethers such as methyl vinyl ether, isopropyl vinyl ether; n-butyl vinyl ether, isopropyl vinyl ether and haloalkyl vinyl ethers such as 2-chloroethyl vinyl ether; n-octyl methacrylate, dodecyl methacrylate, methyl methacrylate, ethyl ethacrylate; haloalkyl acrylates such as chloropropyl acrylates; aminoacrylates and methacrylates and the like; vinyl ketones, vinyl pyridine, alpha,beta-olefinically unsaturated amides such as acrylamide, N-methyl acrylamide, N-t-butyl acrylamide, N-cyclohexyl acrylamide, diacetone acrylamide, methacrylamide, and N-ethyl methacrylamide; alpha,beta-olefinically unsaturated N-alkylol amides such as N-methylol acrylamide, N-ethylol acrylamide, N-propylol acrylamide, N-methylol methacrylamide and N-ethylol methacrylamide; polyfunctional compounds such as methylene-bis-acrylamide, ethylene glycol dimethylacrylate, diethylene glycol diacrylate, allyl pentaerythritol and divinyl benzenes; alpha,beta-olefinically unsaturated carboxylic acid monomers containing from 3 to 10 carbon atoms such as acrylic acid, methacrylic acid, crotonic acid, beta-acryloxypropionic acid, hydrosorbic acid, sorbic acid, alpha-chlorosorbic acid, cinamic acid, beta-styrylacrylic acid, itaconic acid, citratonic acid, maleic acid, fumaric acid, mesaconic acid, glutaconic acid, aconitric acid and the like. The preferred acid monomers are the alpha,beta-monoolefinically unsaturated monocarboxylic acids, such as acrylic acid and methacrylic acid and the like as are known to those skilled in the art. Mixtures of one or more of the above mentioned monomers may also be used. Generally, up to about 20% by weight of other polymerizable vinylidene comonomers may be employed.

The polymer containing latex may be prepared using any of the conventional emulsion or suspension polymerization techniques, although the present invention is particularly applicable to latices prepared by emulsion polymerization. In an emulsion process, emulsifier may be charged at the outset of the polymerization, as in a batch or semi-batch process, or may be added incrementally or by proportioning throughout the run, as in a continuous process. Any of the general types of anionic, cationic or nonionic emulsifiers may be employed, however, best results are generally obtained when anionic emulsifiers are used.

Typical emulsifiers which may be used include those types known to those skilled in the art, for example, as disclosed beginning on page 102 in J. Van Alphen's "Rubber Chemicals", Elsevier, 1956, for example, the alkali metal or ammonium salts of the sulfates of alcohols containing from 8 to 18 carbon atoms such as, for example, sodium lauryl sulfate; alkali metal and ammonium salts of sulfonated petroleum or paraffin oils; sodium salts of aromatic sulfonic acids such as dodecane-1-sulfonic acid and octadiene-1-sulfonic acid; alkyl aryl sulfonates such as sodium isopropyl benzene sulfonate and sodium dodecyl benzene sulfonate; alkali metal and ammonium salts of sulfonated dicarboxylic acid esters such as sodium dioctyl sulfosuccinate and disodium N-octadecyl sulfosuccinamate; alkali metal or ammonium salts of the free acids of complex organic mono- and diphosphate esters; and the like. So called nonionic emulsifiers are octyl- or nonylphenyl polyethoxyethanol and the like. Useful as emulsifiers are the alkali metal salts of the aromatic sulfonic acids and the sodium salts of the aromatic sulfonic acids and the sodium salts of the alkyl aryl sulfonates. In addition to the above-mentioned emulsifiers it may be desirable and advantageous to add post-polymerization emulsifiers and stabilizers to the polymeric anionic latex binders in order to improve the latex stability if it is to be stored for prolonged periods prior to use. Such post-polymerization emulsifiers may be the same as, or different than, the emulsifiers employed in conducing the polymerization but preferably are anionic or nonionic surface active agents.

To initiate the polymerization free radical catalysts are employed. The use of such catalysts, although in certain systems not absolutely essential, ensures a more uniform and controllable polymerization and a satisfactory polymerization rate. Commonly used free radical initiators include the various peroxygen compounds such as the persulfates, benzoyl peroxide, t-butyl hydroperoxide, cumene hydroperoxide; azo compounds such as azodiisobutyronitrile, and dimethyl azodiisobutyrate; and the like. Especially useful as polymerization initiators are the water-soluble peroxygen compounds such as hydrogen peroxide and the sodium, potassium and ammonium persulfates.

The alkali metal and ammonium persulfate catalysts may be employed by themselves or in activated redox systems. Typical redox systems include the persulfates in combination with a reducing substance, such as a polyhydroxy phenol, and an oxidizable sulfur compound such as sodium sulfite or sodium bisulfite, a reducing sugar, a diazomercapto compound, a ferricyanide compound, dimethylaminopropionitrile and the like. Heavy metal ions such as silver, cupric, iron, cobalt, nickel and others may also be used to activate persulfate catalyzed polymerizations. In general the amount of free radical initiator employed will range between about 0.1 to 5% based on the weight of the total monomers. In a batch or semi-batch process the initiator is generally completely charged at the start of the polymerization, however, incremental addition or proportioning of the initiator throughout the polymerization is often desirable. In a continuous process the initiator is, of course, introduced to the reactor by incremental or continuous addition.

In conducting the polymerization for the preparation of acrylonitrile containing latices the monomers are typically charged into the polymerization reactor, which contains the water and, when appropriate, the emulsifying agent. The reactor and its contents are heated and the polymerization initiator added. In batch or semi-batch processes these steps generally occur sequentially. In continuous processes, however, introduction of monomers, water, emulsifying agent, initiator, and heating of the mixture generally occur on an ongoing basis.

The temperature at which the polymerization is conducted is not critical and may range from about 0°C and 80°C or higher. Excellent results, however, have been obtained when the polymerization temperature is maintained between 5°C and 70°C. Polymerization modifiers such as the primary, secondary and tertiary mercaptans, buffers, electrolytes and the like may also be included in the polymerization medium.

After polymerization the polymer dispersed within the latex is coagulated. The resulting coagulum is separated from the resulting slurry by filtering, centrifugation, evaporation of volatiles, or other known techniques. In processes of the prior art, coagulation is usually accomplished by addition of coagulants to the polymer dispersion. Such coagulants may include an aliphatic alcohol such as isopropyl alcohol, acids such as sulfuric, brines and salts such as $KAl(SO_4)_2 \cdot 12H_2O$, $CaCl_2 \cdot 6H_2O$, $NH_4Al(SO_4)_2 \cdot 12H_2O$, $Al_2(SO_4)_3$, and other materials. The dispersion undergoing coagulation often is also heated during and/or after this step to encourage the coagulum to coalesce to form particles of the desired size.

In the process of the present invention, a hydroxylamine is added to the aqueous medium. Although this addition of hydroxylamine may take place after coagulation of the polymer, hydroxylamine preferably is added to the aqueous medium before or during the coagulation step.

The hydroxylamine useful in the process of the invention has an active hydrogen bonded to the nitrogen, and preferably is one described by the general formula RHNOH wherein R is hydrogen or a $C_1$ to $C_3$ alkyl moiety. Hydrogen, methyl and ethyl moieties, such as in hydroxylamine, N-methyl hydroxylamine and N-ethyl hydroxylamine, are more preferred. Hydroxylamine, e.g. $NH_2OH$, is most preferred. However, as free hydroxylamine tends to be unstable and may be difficult or dangerous to handle, it is preferred that hydroxylamine be complexed with an acid to facilitate its handling. This complexing of the hydroxylamine with acid has the further advantages of aiding in the breaking of emulsions, and of rendering the hydroxylamine more soluble in the aqueous medium. This acid preferably is a strong inorganic acid, such as HCl and $H_2SO_4$, and forms complexes with hydroxylamine such as hydroxylamine hydrochloride ($NH_2OH.HCl$), hydroxylamine acid sulfate ($NH_2OH.H_2SO_4$) and hydroxylamine sulfate ($[NH_2OH]_2.H_2SO_4$). Hydroxylamine hydrochloride and hydroxylamine sulfate are more preferred. Although hydroxylamine hydrochloride is most preferred for color sensitive polymers, where color is not important hydroxylamine sulfate may be most preferred for operational considerations and cost.

It is critical to the present invention that less than the stoichiometric equivalent of the amount of amine, based on the amount of free acrylonitrile monomer present in the dispersion, be introduced to the aqueous medium. Stoichiometric ratios of the hydroxylamine to acrylonitrile monomer equal to or less than 1:1.5 are preferred, such as where one mole of hydroxylamine hydrochloride or one half mole of hydroxylamine sulfate is added for every 1.5 moles of free acrylonitrile monomer. Stoichiometric ratios of equal to or less than 1:2 are more preferred, and may be 1:2.5, 1:4, 1:7 or even less consistent with the present invention.

The hydroxylamine may be added to the dispersion after the polymer has been coagulated by conventional means to form a slurry. However, in the preferred embodiment, acid complexed hydroxylamine is added to an aqueous/polymer emulsion before coagulation, in an amount less than the stoichiometric equivalent of the free acrylonitrile present, yet which is sufficient to at least partially coagulate the polymer dispersed in the aqueous medium. The minimum amount of hydroxylamine required for coagulation to occur may vary depending on the amount of polymer present, the amount of free residual monomer present and the temperature of the medium. However, in most processes this amount should be at least 0.65 parts by weight of hydroxylamine per 100 parts by weight of polymer in the aqueous medium. More preferably at least 1 part of hydroxylamine should be added per 100 parts of polymer present in the medium.

Consistent with the invention, the hydroxylamine may be used alone to coagulate the polymer, or may be supplemented by other known coagulants. Supplemental chemical coagulants may be added to the dispersion either before, at the same time as, or after addition of hydroxylamine. However, supplemental coagulants usually should be used in relatively minor amounts, such as less than 50% by weight of the amount of hydroxylamine employed. In the most preferred embodiment, however, the chemical coagulant consists essentially of hydroxylamine.

The dispersion preferably also is heated as part of the coagulation step, such as by the introduction of steam in standard latex dewatering procedures. This heating may minimize the quantity of amine required to achieve satisfactory coagulation of the polymer. Heating may occur simultaneous with the introduction of the hydroxylamine to the dispersion, such as may typically occur in continuous processes, or may occur after addition of the hydroxylamine, when coagulation has at least partially already taken place, or both. Although the preferred temperature will vary depending, at least in part, on the temperature at which resin begins to degrade, the temperature at which the resin softens sufficiently to coalesce, and the particle size of coagulum desired, temperatures of about 80°C to about 100°C usually are appropriate.

The process of the present invention is also applicable to effluent streams from plants using acrylonitrile, wherein the effluent streams contain dissolved free acrylonitrile monomer in trace or even larger amounts. By treating such water effluents in accordance with this invention, the undesirable acrylonitrile monomer is converted so as not to be a problem in plant effluence. A further application would be the use of hydroxylamines as gas scrubbers where gaseous effluents from reactors and the like may contain undesirable acrylonitrile monomer that might be vented to the atmosphere.

In addition to the above description, the process of the present invention may be understood by reference to the illustrative non-limiting examples provided below.

Examples 1 and 2 below describe various embodiments of the present invention. Comparative Examples C3-C6 do not embody the invention, but provide a basis for comparing the relative effectiveness of the process of the present invention.

Unless noted otherwise, each of Examples 1 and 2 and Comparative Examples C3-C6 utilized the apparatus and procedures outlined below. Each coagulation was performed using the same equipment, including the same stainless steel beaker, thermometer, electrically driven agitator, and sparging orifice. A 500 mL sample of ABS latex was used for each of the examples through Comparative Example C6. One mL aliquot of the sample was taken to determine residual free acrylonitrile monomer (ACN) content by gas chromatography (GC), and the results reported under "initial" in the table below. The remaining 499 mL of the sample was added with stirring at a temperature of 82°C (180°F), to 500 mL of aqeuous solution containing the amount of coagulant indicated in each example. Immediately thereafter, a 10 mL aliquot of the suspension or, where coagulation occurred, the resultant slurry was removed and submitted for GC analysis for free acrylonitrile monomer (ACN), and the results reported under "slurry" in the table below. Using steam sparging, the remaining sample was heated to 91°C (195°F) and held at this temperature for five minutes. Thereafter, the sample was cooled to 71°C (160°F) by stirring the contents at constant rpm while simultaneously cascading a rapid stream of very cold running water over the outer sides of the beaker. The sample was filtered with gentle vacuum through a Buchner funnel lined with a fine-mesh nylon filter cloth. A portion of the wet filtrate was analyzed for residual ACN, and the results reported under "filtrate" in the table below. The remaining wet filtrate retained in the funnel was collected without washing and was dried in an oven maintained at a temperature below 54°C (130°F) for 24 hrs. All samples were dried in the same oven, and tested for residual ACN. The residual ACN content of the samples treated according to the process of the present invention was commensurate with that of samples treated by the control process.

The results of the analysis for these examples are indicated in Table I. Unless noted otherwise, the amount of ACN is indicated in parts per million (ppm) of the dry latex. The amount of the coagulant is indicated in parts by weight per one hundred parts by weight of ABS latex (denoted "pph Coag"). The molar ratio of coagulant to residual ACN is listed in the tables under "Moles Coag/Moles ACN".

In addition to the examples indicated below in Table I, sodium oxalate was also tested at 5.0 pph, but failed to coagulate the latex.

The data in Table I indicate that a significant reduction of free residual acrylonitrile monomer may be obtained by the process of the present invention. Although not wishing to be bound by theory, the data for these and the following Examples and Comparative Examples suggest that the free acrylonitrile monomer does not volatilize out of the aqueous medium to a significant extent, but instead forms a nonvolatile adduct with the hydroxylamine, which retains the monomer in the aqueous medium. Testing of the dry resin product also indicated the process of the invention to be effective in reducing the content of residual styrene monomer, alpha-methylstyrene monomer, and catalyst in relation to the residual amounts of these components in resins produced by the comparative processes.

Table I

| | | | | ACN (ppm) | | |
|---|---|---|---|---|---|---|
| Example | Coagulant | pph Coag | Moles Coag/Moles ACN | initial | slurry | filtrate |
| 1 | $NH_2OH \cdot HCl$ | 1.25 | 0.29 | 13110 | 700 | 405 |
| 2 | $NH_2OH \cdot HCl$ | 2.50 | 0.58 | 13135 | 800 | 565 |
| C3 | $H_2SO_4$ | 1.25 | 0.20 | 13407 | 1080 | 535 |
| C4 | $H_2SO_4$ | 2.50 | 0.41 | 13234 | 1180 | 900 |
| C5 | oxalic acid | 1.25 | 0.22 | 13234 | 1010 | 805 |
| C6 | oxalic acid | 2.50 | 0.45 | 13234 | 1010 | 895 |

Comparative Examples C7-C13 exemplify latex coagulation processes wherein the coagulant is an acid. Examples 14-17 embody processes of the present invention, wherein the coagulant is a hydroxylamine. These examples were performed according to the procedure described above, except that the initial volume of both the latex and the coagulating solution was increased to 1000 mL each, and a 10 mL aliquot was removed both before and after the latex was combined with the coagulant.

The effect of these processes on residual ACN is indicated below in Table II. An increase in the amount of ACN in the filtrate over that in the slurry observed in some examples may have been due to inadequate mixing of the sample before the aliquot was taken. The ACN content of the dried resin of the Examples and the Comparative Examples was approximately the same.

As is apparent from an examination of the tables, the process of the present invention may result in improved scavenging of residual ACN over analogous processes.

## Table II

| Example | Coagulant | pph Coag | Moles Coag/Moles ACN | ACN (ppm) | | |
|---|---|---|---|---|---|---|
| | | | | initial | slurry | filtrate |
| C7 | $H_2SO_4$ | 1.25 | 0.17 | 14282 | 1660 | 1020 |
| C8 | oxalic acid | 1.25 | 0.18 | 14282 | 1180 | 1300 |
| C9 | oxalic acid | 2.50 | 0.37 | 14282 | 1450 | 1320 |
| C10 | maleic acid | 1.25 | 0.14 | 14282 | 1160 | 1140 |
| C11 | maleic acid | 2.50 | 0.28 | 14282 | 1070 | 1030 |
| C12 | HCl | 1.25 | 0.46 | 14282 | 1280 | 1230 |
| C13 | HCl | 2.50 | 0.92 | 14282 | 1510 | 1190 |
| 14 | $NH_2OH.HCl$ | 1.25 | 0.24 | 14225 | 480 | 495 |
| 15 | $NH_2OH.HCl$ | 2.50 | 0.48 | 14225 | 495 | 530 |
| 16 | $(NH_2OH)_2.H_2SO_4$ | 1.25 | 0.10 | 14225 | 335 | 280 |
| 17 | $(NH_2OH)_2.H_2SO_4$ | 2.50 | 0.20 | 14225 | 86 | 43 |

- 17 -

Examples 18 and 19 exemplify processes performed according to the procedures outlined above for Comparative Examples C7-C13 and Examples 14-17, with some modifications. In Examples 18 and 19, acid was used to coagulate the latex to form a slurry. The amount of acid used is indicated in Table III under "pph Coag". An aliquot of the sample was taken and analyzed for residual ACN. The results are indicated under "slurry" in the table below. Hydroxylamine was added and the sample subjected to sparging. The amount of hydroxylamine is indicated in the table under "pph Sca". After sparging an aliquot was taken and analyzed for ACN. The results of this analysis are indicated under "scav" in the table below. The ratio of the number of moles of coagulant and scavenger, combined, to the number of moles of free residual acrylonitrile monomer initially present is indicated in the table under "Moles (C+Sca)/Moles ACN". The ACN content of the dry product was approximately the same as that for the previous Examples and Comparative Examples.

Resins produced by Examples 14-19 and Comparative Examples C7-C13 were visually inspected and ranked as indicated below in Table IV according to their relative lightness and darkness. Testing also indicated the physical properties of the resins produced by the process of the present invention as embodied by these Examples to be commensurate with the properties of resins produced by the processes of the Comparative Examples.

## Table III

| Ex. | Coagulant | pph Coag | Scavenger | pph Sca | Moles (C+Sca)/ Moles ACN | ACN (ppm) initial | slurry | scav | filtrate |
|---|---|---|---|---|---|---|---|---|---|
| 18 | $H_2SO_4$ | 1.25 | $(NH_2OH)_2 \cdot H_2SO_4$ | 1.25 | 0.46 | 14225 | 1350 | 900 | 620 |
| 19 | HCl | 1.25 | $NH_2OH \cdot HCl$ | 1.25 | 0.70 | 14225 | 1040 | 1050 | 735 |

## Table IV

| Ranking | Example | Coagulant/Scavenger |
|---|---|---|
| lightest | 19 | 1.25 pph HCl, then 1.25 pph $NH_2OH \cdot HCl$ |
| | C12 | 1.25 pph HCl |
| | 18 | 1.25 pph $H_2SO_4$, then 1.25 pph $(NH_2OH)_2 \cdot H_2SO_4$ |
| | 15 | 2.50 pph $NH_2OH \cdot HCl$ |
| | C7 | 1.25 pph $H_2SO_4$ |
| | 17 | 2.50 pph $(NH_2OH)_2 \cdot H_2SO_4$ |
| | 14 | 1.25 pph $(NH_2OH) \cdot HCl$ |
| darkest | 16 | 1.25 pph $(NH_2OH)_2 \cdot H_2SO_4$ |

Comparative Example C20 and Examples 21-23 exemplify coagulation processes performed according to the procedures described above, using 1000 mL latex and 1000 mL coagulation solution for each example. However, when the slurry was filtered, the resulting filtered aqueous solution was designated "filtrate water" and tested for residual ACN monomer. The filtrate cake was washed once with 1000 mL water, and the filtered water designated "Wash 1". The filtrate was washed for a second time with 1000 mL water and the filtered water designated "Wash 2". The latex dispersion in Example 21 failed to coagulate and was discarded without further testing.

The results of GC analysis of these liquids for residual ACN are indicated below in Table V. The GC equipment employed for this analysis was set to detect 10 ppm as the lower limit for ACN content. In addition to the data presented in the table, dry samples of the product resins were tested for residual ACN. This analysis indicated the ACN content of the resin of Comparative Example C20 and Examples 22 and 23 to be approximately the same.

Table V

| Example | Coagulant | pph Coag. | Moles Coag/Moles ACN | ACN (ppm) | | | |
|---------|-----------|-----------|----------------------|-----------|----------|--------|--------|
| | | | | | filtrate | | |
| | | | | initial | water | Wash 1 | Wash 2 |
| C20 | $H_2SO_4$ | 1.25 | 0.12 | 20679 | 1630 | 660 | 375 |
| 21 | $(NH_2OH)_2 \cdot H_2SO_4$ | 0.63 | 0.04 | 20679 | – | – | – |
| 22 | $(NH_2OH)_2 \cdot H_2SO_4$ | 1.25 | 0.07 | 20679 | 47 | 32 | <10 |
| 23 | $(NH_2OH)_2 \cdot H_2SO_4$ | 2.50 | 0.14 | 20679 | <10 | <10 | <10 |

That treatment according to the present invention resulted in residual acrylonitrile monomer being retained in the waste water, where it may be degraded by bacterial action, rather than volatilizing into the air is suggested by the Chemical Oxygen Demand (COD, mg/l) and the Total Kjeldahl Nitrogen (TKN, mg/l) for the filtrate water, first and second wash waters. These are standard tests used to measure the organic loading of water, and are explained further in the text "Standard Methods for the Examination of Water and Waste Water", ... Ed., 1980, by the American Public Health Association and the Water Pollution Control Federation. The results of these tests for the waste water of Comparative Example C20 and Examples 22 and 23 are indicated below in Table VI.

The data of Tables V and VI indicate that the process of the present invention may be used to decrease the amount of free residual acrylonitrile monomer in aqueous dispersions, while retaining the acrylonitrile in the aqueous phase where the residual monomer may be readily degraded and, at the same time, producing a resin product with free acrylonitrile monomer levels commensurate with those of known processes.

Table VI

| Example | C20 | 22 | 23 |
|---|---|---|---|
| Coagulant | $H_2SO_4$ | $(NH_2OH)_2 \cdot H_2SO_4$ | $(NH_2OH)_2 \cdot H_2SO_4$ |
| Coag., pph | 1.25 | 1.25 | 2.50 |
| **Filtrate water** | | | |
| ACN, mg/l | 1630 | 47 | <10 |
| COD, mg/l | 4190 | 5225 | 6490 |
| TKN, mg/l | | | |
| ammonia-N | 10.5 | 25.9 | 46.9 |
| organic-N | 63.0 | 673.4 | 987.0 |
| Total | 73.5 | 699.3 | 1033.9 |
| **Wash 1** | | | |
| ACN, mg/l | 660 | 32 | <10 |
| COD, mg/l | 1465 | 2550 | 3400 |
| TKN, mg/l | | | |
| ammonia-N | 4.9 | 11.9 | 23.8 |
| organic-N | 20.3 | 382.9 | 501.2 |
| Total | 25.2 | 394.8 | 525.0 |
| **Wash 2** | | | |
| ACN, mg/l | 375 | <10 | <10 |
| COD, mg/l | 500 | 1390 | 1335 |
| TKN, mg/l | | | |
| ammonia-N | 1.4 | 7.0 | 9.1 |
| organic-N | 9.1 | 166.6 | 179.9 |
| Total | 10.5 | 173.6 | 189.0 |

## CLAIMS

1. A process for reducing the free acrylonitrile monomer content of an aqueous medium containing said monomer, the process comprising adding to said medium a hydroxylamine in an amount less than the stoichiometric equivalent of said free acrylonitrile monomer present in said medium.

2. The process of claim 1 wherein said hydroxylamine is a N-methyl hydroxylamine, N-ethyl hydroxylamine or acid complexed hydroxylamine.

3. The process of claim 2 wherein the hydroxylamine is acid complexed hydroxylamine.

4. The process of claim 3 wherein the hydroxylamine is complexed with HCl or $H_2SO_4$.

5. The process of claim 1 wherein the stoichiometric ratio of said hydroxylamine to said free acrylonitrile monomer is equal to or less than 1:1.5.

6. The process of claim 5 wherein the stoichiometric ratio of said hydroxylamine to said acrylonitrile monomer is equal to or less than 1:2.

7. A process for reducing the free acrylonitrile content of an aqueous medium which contains the monomer and is an aqueous dispersion of an acylonitrile containing polymer, the process comprising adding a hydroxylamine to said dispersion in an amount which is less than the stoichiometric equivalent of said free acrylonitrile monomer present in said medium yet is sufficient to at least partially coagulate said polymer.

8.    The process of claim 7 wherein at least 0.65 parts by weight of said hydroxylamine is added for each 100 parts by weight of said polymer present in said aqueous medium.

9.    The process of claim 8 wherein at least 1 part by weight of said hydroxylamine is added for each 100 parts by weight of said polymer present in said aqueous medium.

10.    The process of claim 7 wherein said aqueous dispersion is heated.

11.    The process of claim 10 wherein said aqueous dispersion is heated to a temperature of about 80°C to about 100°C.